(19) **Europäisches Patentamt**

**European Patent Office**

**Office européen des brevets**

(11) **EP 1 203 943 A1**

(12) **EUROPÄISCHE PATENTANMELDUNG**

(43) Veröffentlichungstag:
08.05.2002 Patentblatt 2002/19

(51) Int Cl.⁷: **G01N 21/55**

(21) Anmeldenummer: **01125925.6**

(22) Anmeldetag: **30.10.2001**

| | |
|---|---|
| (84) Benannte Vertragsstaaten:<br>**AT BE CH CY DE DK ES FI FR GB GR IE IT LI LU<br>MC NL PT SE TR**<br>Benannte Erstreckungsstaaten:<br>**AL LT LV MK RO SI**<br><br>(30) Priorität: **03.11.2000 DE 10054415**<br><br>(71) Anmelder: **Systektum GmbH<br>24960 Glücksburg (DE)**<br><br>(72) Erfinder:<br>• **Schade, Wolfgang, Prof.Dr.<br>38644 Goslar (DE)** | • **Blanke, Torsten, Dipl.-Phys.<br>24576 Bad Bramstedt (DE)**<br>• **Willer, Ulrike, Dipl.-Phys.<br>38678 Clausthal-Zellerfeld (DE)**<br>• **Scheel, Dirk, Dipl.-Phys.<br>24161 Altenholz (DE)**<br><br>(74) Vertreter: **Biehl, Christian, Dipl.-Phys.<br>Boehmert & Boehmert,<br>Anwaltssozietät,<br>Niemannsweg 133<br>24105 Kiel (DE)** |

(54) **Vorrichtung und Verfahren zur Analyse optisch dichter Medien mittels Evaneszenzfeld-Spektroskopie**

(57) Es werden ein Verfahren und eine Vorrichtung zur Analyse eines optisch dichten Mediums (12) mittels Evaneszenzfeld-Spektroskopie beschrieben. Die Vorrichtung umfaßt eine nicht ummantelte, Laserlicht leitende opische Faser (10), eine durchstimmbare Laser-lichtquelle zur Einstrahlung von Laserlicht (14) in die Faser und einen Detektor (20) zur Erfassung des Intensitätsspektrums des die Faser durchlaufenden Laserlichts. In einer bevorzugten Ausführungsform wird eine gepulste Laserlichtquelle verwendet und es werden zeitlich aufgelöste Intensitätsspektren erfasst.

*Fig. 1A*

**Beschreibung**

Die Erfindung betrifft einen Analysesensor und ein Verfahren zur spektroskopischen Analyse in optisch dichten Medien.

In vielfältigen Anwendungen der Umweltanalytik sind Messungen in häufig komplexen optisch dichten Medien erforderlich. Aber aufgrund ihrer starken Streuung ist die Diagnostik mit Mitteln der hochauflösenden Absorptionsspektroskopie insbesondere im nahen und mittleren Infrarotbereich, die ansonsten zum selektiven, empfindlichen Nachweis verschiedenster Elemente und Verbindungen gut geeignet ist, nur noch sehr bedingt möglich.

Die Erfindung hat sich zur Aufgabe gestellt, auch in optisch dichten Medien die Anwesenheit bestimmter Substanzen selektiv und quantitativ zu erfassen.

Erfindungsgemäß wird dies durch ein Verfahren und einen Sensor nach den unabhängigen Ansprüchen gelöst. Die Unteransprüche geben vorteilhafte Ausführungsformen wieder.

Das dem Verfahren zugrundeliegende Meßprinzip, die Evaneszenzfeld-Spektroskopie, beruht auf dem Phänomen, das durch den nicht quantenmechanischen, aber oft "optisches Tunneln" genannten Lichtaustritt im Nahbereich eines Lichtleiters die optischen Eigenschaften des direkt an der Faser anliegenden Mediums auf das Licht in der Faser zurückwirken.

Bisherige faseroptische Sensoren nutzten ummantelte Fasern, in denen sich die nachzuweisenden Substanzen mehr oder weniger anreicherten. Durch Sättigungs- und Adhäsionseffekte ist dabei jedoch keine permante Überwachung von Konzentrationsschwankungen möglich. Weiter wurden Messungen nicht spektral aufgelöst, was die Selektivität des Verfahrens stark beeinträchtigte. Konzentrationen konnten nicht bestimmt werden.

Zur Erfassung der bei unterschiedlichen Wellenlängen rückwirkenden Substanzen wird die Wellenlänge des durch die Faser übertragenden Laserlichtes über der Absorptionslinie eines Moleküls, auf dessen Anwesenheit und vorteilhafterweise Konzentration untersucht werden soll und welches im komplexen und/oder heißen Medium direkt um die nicht ummantelte Faser vermutet wird, durchgestimmt.

Aufgrund der molekularen Resonanz findet dabei sowohl eine Wellenlängen-Dispersion des Brechungsindex des umgebenden Mediums, als auch eine Änderung des Absorptionskoeffizienten statt, der zudem von der Temperatur des Mediums abhängig ist.

Im Falle der Resonanz, also in dem Bereich der Absorptionslinie eines Moleküls, findet eine Veränderung der frustrierten und abgeschwächten Totalreflexion statt, die als Intensitätsänderung am anderen Faserende (oder bei Vorhandensein von reflektierenden Einschlüssen in dem Lichtleiter am Einstrahlende) gemessen und zur Bestimmung der Konzentration des Moleküls im Umgebungsbereich des Lichtleiters genutzt werden kann.

Der in diesem Verfahren genutzte nicht ummantelte Sensor kann dabei überaus resistent gegenüber hohen Temperaturen oder chemisch aggressiven Medien sein.

Im zweiten Teil der Beschreibung wird ein Sensor für den Einsatz in den sehr heißen und komplexen Gasaustritten von Vulkanen beschrieben werden, der die Anwesenheit der dort austretenden chemisch aggressiven $H_2S$-Gase erfassen und deren Konzentration bestimmen kann. Dieser Sensor kann zukünftig vorteilhaft zur Frühwarnung vor möglichen Vulkanausbrüchen benutzt werden, da Korrelationen zwischen Konzentrationsänderungen der Gase in den Fumerolen der Vulkane und seismischen Aktivitäten beobachtet werden.

Andere mögliche Anwendungen des erfindungsgemäßen höchst inerten Sensors sind direkte Messungen bestimmter Substanzen in den Verbrennungsbereichen von Müllverbrennungsanlagen, indem beispielsweise eine Saphirfaser als Sensor quer durch die Temperaturen weit über 1000°C ereichende Rauchgasabführung geleitet wird. In diesen Fällen ist aufgrund der heißen Gase ein direkter Laserlichtstrahl nicht einsetzbar, da die inhomogen heißen Gase wie eine Linse das Licht ablenken, und das Laserlicht daher bisher nicht auf einen Detektor zurückgeführt werden kann.

Je länger nun die Faser nach der Erfindung gewählt wird, umso höher iist die Wechselwirkung mit dem Medium und die Nachweisempfindlichkeit. Daher wird vorgeschlagen, die Faser in einem chemisch inerten Träger - beispielsweise Teflon - spiralig aufzuwickeln, so daß ein Höchstmaß an Länge in einem gewünschten zu überwachenden Volumen (beispielsweise einer Fumerole) einfach angeordnet werden kann, wobei gleichzeitig durch Belassung eines Abstandes zwischen benachbarten Faserschlaufen der Durchtritt des optisch dichten Mediums nicht gestört wird. Gerade bei heißen optisch dichten Medien ist es wichtig, das die Faser dabei die Temperatur des Mediums annehmen kann, da es ansonsten auf der Oberfläche der Faser zur Kondensatbildung kommen kann, die die Messungen verfälschen würde.

Für den Fall, daß nicht kontinuierliches, sondern gepulstes Laserlicht verwendet wird, kann durch Aufzeichnung der zeitlichen Spektren auch eine Ortsauflösung, beispielsweise eines Temperaturgradienten oder eines Konzentrationsgradienten erreicht werden. Dies ist insbesondere an solchen Meßorten von Vorteil, bei denen durch den Gradienten, wie beispielsweise bei vulkanischen Messungen zusätzliche Informationen gewonnen werden können.

Bei Verwendung von Fasern, die über lichtrückstreuende Einschlüsse verfügen, können Lichtemitter und Detektor am selben Ende angeordnet werden, was lange Fasern für unzugängliche Beobachtungsorte - entweder hoch in die Atmosphäre, tief in Vulkanspalten oder tief ins Meer - ermöglicht, ohne daß Apparaturen ans entfernte Ende zu bringen sind.

Der faseroptische Sensor ist dabei in hohem Maße chemisch stabil und kann aufgrund seiner vergleichsweise geringen Kosten auch in großer Länge in unzugängliche Tiefen herabgeführt werden. Beispielsweise hat sich eine Silber-Halogenidfaser ($AgCl_xBr_{1-x}$) als vorteilhaft für die Erfassung von Wasserdampf herausgestellt. Andere sich als geeignet erweisende Fasermaterialien sind Saphir, Quarz oder Chalcogenid für den mittleren und nahinfraroten Spektralbereich.

Weitere Vorteile der Erfindung ergeben sich aus nachfolgender Beschreibung eines bevorzugten Ausführungsbeispiels der Erfindung. Dabei zeigt:

Fig. 1a      eine schematische Darstellung der Vorrichtung aus Glasfaser, Emitter und Detektor im Labormaßstab mit Absorptionszelle,

Fig. 1b      eine nach der Erfindung spiralig aufgerollte Evaneszenzfeld-Faser,

Fig. 2      den sich beim Durchstimmen der Wellenlänge ergebenden Intensitätsverlauf mit den die Anwesenheit eines Moleküls erkennbar machenden Schwächungen, und Moleküls erkennbar machenden Schwächungen, und

Fig. 3      die gemessene Lichtleistung P für einen engen Wellenlängenbereich wobei (a) die eigentliche Messung und (b) eine Referenzmessung ist.

Das vom Detektor erfaßte Licht folgt der Gleichung

$$P(\lambda) = \int I(I_0, \theta, \lambda) \cdot \left( \frac{(n_2(\lambda) - n_1(\lambda))^2 + \frac{\sigma \lambda}{4\pi} \cdot N_2}{(n_2(\lambda) + n_1(\lambda))^2 + \frac{\sigma \lambda}{4\pi} \cdot N_2} \right)^{\frac{z}{r} \tan \theta} 2\pi \sin \theta \, d\theta$$

Wobei :

P($\lambda$)      die gemessene Leistung in Abhängigkeit von der Wellenlänge,

$I(I_0, \theta, \lambda)$      die Intensität der Lichtquelle abhängig von Ausgangsintensität, Einkoppelwinkel und Wellenlänge ist,

$N_1(\lambda)$      der Brechungsindex der Faser,

$n_2(\lambda)$      der Brechungsindex des umgebenden Mediums,

$\sigma$      der Wirkungsquerschnitt für die Absorption,

$N_2$      die Teilchendichte im umgebenden Medium,

Z      die Länge des Fasersensors und

r      der Radius der Faser ist.

Zur Bestimmung von $N_2$ stehen nun neben der Meßgröße P($\lambda$) die bekannten Größen z, r, $\sigma$, $n_1$ und $n_2$ zur Verfügung. $I(I_0, \theta, \lambda)$ kann experimentell bestimmt werden.

Experimentell passt man zur Bestimmung der Teilchendichte nun unter Veränderung des Parameters $N_2$ die Meßkurve an das aus der Formel erhaltene Profil an.

Die Formel berücksichtigt, daß für einen festen Einkoppelwinkel $\tau$ sich die gemessene Leistung aus der Eingangsintensität multipliziert mit dem Reflexionskoeffizienten R potenziert mit der Anzahl der Reflexionen als $I \cdot R^n$ ergibt. Der Reflexionskoeffizient setzt sich dabei aus einem Anteil für Verluste über die Brechung und einen über die Absorption zusammen. Die Anzahl der Reflexionen ergibt sich geometrisch aus Faserlänge, Faserradius und Winkel. Aufgrund der gewählten Zylindersymmetrie erhält man den einfachen Faktor $2\pi \sin\theta$. Wird nun über alle auftretenden Einkoppelwinkel integriert, gelangt man zur obigen Formel.

Die obige Gleichung ermöglicht so die Berechnung der Konzentration aus Messungen der optischen Leistung P als Funktion der Wellenlänge für eine Temperatur T.

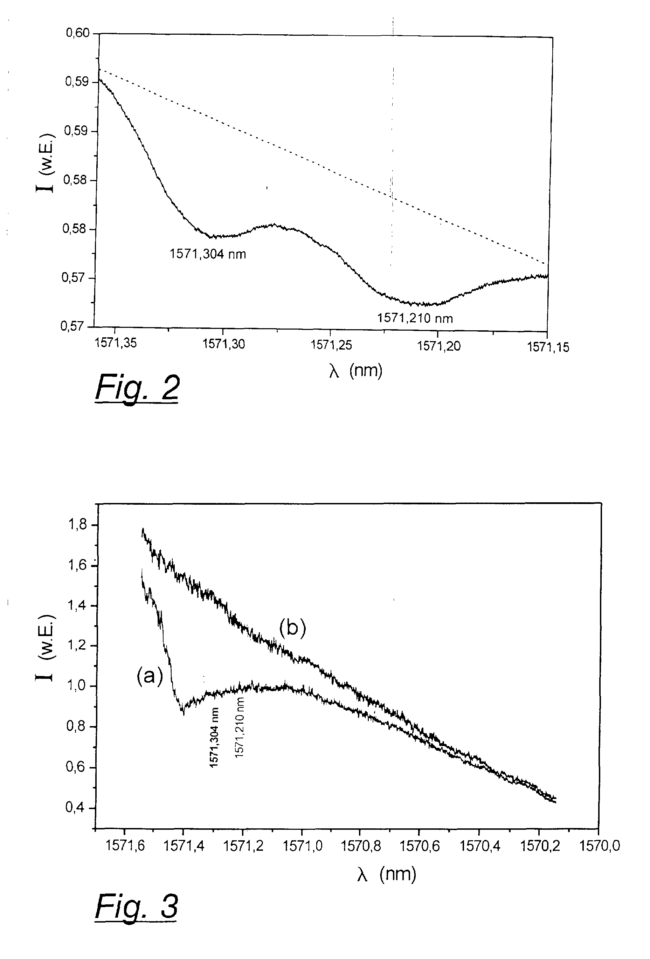

Die Anwesenheit eines bestimmten Moleküls kann, wie aus der Fig. 2 erkennbar, beim Durchstimmen der Wellenlänge λ anhand der sich im Intensitätsverlauf I (in willkürlichen Einheiten) befindlichen Schwächungen erkannt werden.

Diese Schwächungen beruhen auf der Wellenlängenabhängigkeit der Absorption und Dispersion. Die Breite der gemessenen Linienprofile hängt von der Wechselwirkung der zu untersuchenden Molekülspezies mit der Umgebung ab (Druck, Temperatur).

In der Fig. 3 ist die Intensität I für die gemessene Lichtleistung P für den Wellenlängenbereich 1571,6 nm bis 1570,2 nm gezeigt, wobei (a) die Messung zeigt, in der der Sensor in einer Vülkan-Fumerole positioniert ist und (b) eine Referenzmessung neben der Fumerole zeigt. Die Abschwächung der Lichtleistung P im Fall der Resonanz ist deutlich zu erkennen. Durch gleichzeitige Messung sowohl einer Referenz wie auch an dem zu untersuchenden Ort, bevorzugt noch mit Licht nur einer Laserquelle und rechnerisches Dividieren der erhaltenen Ergebnisse für jede Wellenlänge kann der Einfluß anderer Faktoren noch weiter verringert werden, und die Messgenauigkeit gesteigert werden.

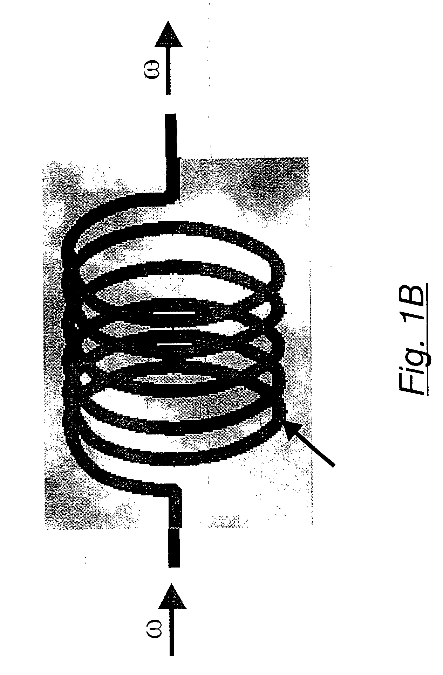

Für die Anwendung in heißen chemisch aggressiven Medien wird nun vorgeschlagen, den faseroptischen Sensor 10 wie in Figur 1B in Form einer langen Spirale unter Belassung eines mittigen Freiraumes auszuführen. Dabei halten z.B. vier parallele Teflonstäbe, durch die die Faser jeweils quer zur Erstreckung der Stäbe, durch diese hindurchtretend gewunden ist, die Faser. Der Durchmesser der Spirale kann dabei z.B. 5 cm betragen und der Abstand der einzelnen Windungen z.B. 5 mm sein.

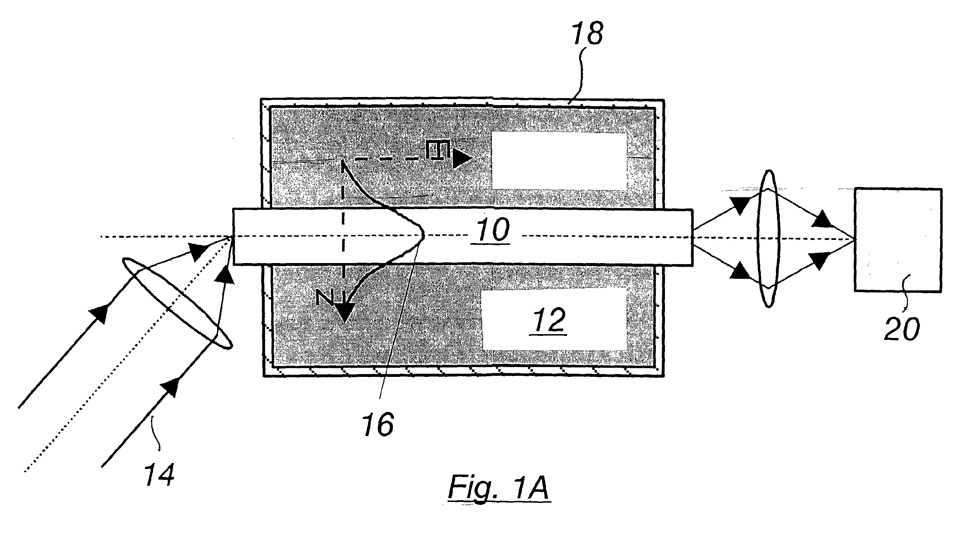

Figur 1A zeigt schematisch die Vorrichtung aus Glasfaser 10 (noch nicht spiralig), Licht 14 aus dem Emitter und den Detektor 20, wobei eine Absorptionszelle 18 die Faser 10 und das zu untersuchende Medium 12 umschließt. Mit Bezugszeichen 16 ist die erklärend für den Lichtaustritt in den Nahbereich, die Evaneszenz, eingezeichnete Kurve an der Achse der Faser 10 bezeichnet.

Als Laserlichtquellen eignen sich single mode-Diodenlaser oder DFB-Polymerlaser im nahen Infrarotbereich, und Systeme, die auf Differenzfrequenzerzeugung von zwei Diodenlasern und einem nichtlinearen optischen Kristall oder einem Halbleiter-Wellenleiter für den mittleren Infrarotbereich basieren.

Alle drei Laserlichtquellen können ohne Auftreten von Luftstrecken durch direkte optische Kontaktierung mit der Spiralfaser und dem Detektor zu einem kompakten Gesamt-Sensorsystem kombiniert werden.

## Patentansprüche

1. Analysesensor für optisch dichte Medien, **gekennzeichnet durch** eine Laserlicht leitende Faser, eine Laserlicht in die Faser einstrahlende Einrichtung und einen Detektor zur Erfassung der Intensität des die Faser im wesentlichen durchlaufenden Laserlichts.

2. Analysesensor nach Anspruch 1, **dadurch gekennzeichnet, daß** die Faser mit lichtreflektierenden Einschlüssen versehen ist, und die einstrahlende Einrichtung und der Detektor am selben Ende der Faser an diese angesetzt sind.

3. Analysesensor nach einem der vorangehenden Ansprüche, **dadurch gekennzeichnet, daß** die Faser nicht ummantelt ist und aus einem chemisch inerten, bei hohen Temperaturen bis über 1000°C beständigen Material besteht.

4. Analysesensor nach einem der vorangehenden Ansprüche, **dadurch gekennzeichnet, daß** die einstrahlende Einrichtung ein durchstimmbarer Laser ist.

5. Analysesensor nach einem der vorangehenden Ansprüche, **dadurch gekennzeichnet, daß** der Detektor mit einer Einrichtung zur Erfassung eines zeitlichen Spektrums versehen ist und die einstrahlende Lichtquelle ein gepulster Laser ist.

6. Analysesensor nach einem der vorangehenden Ansprüche, **dadurch gekennzeichnet, daß** die lichtleitende Faser spiralig gewickelt ist.

7. Verfahren zur Analyse in optisch dichten Medien, **gekennzeichnet durch** die Schritte :

   - Einbringen einer optischen, ungeschirmten Faser in das optisch dichte Medium,

- Einstrahlen von Laserlicht einer definierten, sich während der Messung in einem vorbestimmten Bereich variierenden Wellenlänge,

- Erfassen der Intensität des im wesentlichen die Faser durchlaufenden Lichts.

**8.** Verfahren nach Anspruch 7, **dadurch gekennzeichnet, daß**

- das Einstrahlen von Laserlicht gepulst geschieht, und

- die Erfassung der Intensität zeitaufgelöst erfolgt, und

- eine rechnerische Zuordnung der in einem definierten Zeitfenster gemachten Beobachtung zu entsprechend der Laufzeit des Lichts zugehörigen Bereichen der Faser vorgenommen wird.

**9.** Verfahren nach einem der Ansprüche 7 oder 8, **dadurch gekennzeichnet, daß** eine Teilchendichte $N_2$ durch anpassen ernier Meßkurve unter Veränderung von $N_2$ mit einem Profil erfolgt, daß durch die Gleichung

$$P(\lambda) = \int I(I_0, \theta, \lambda) \cdot \left( \frac{(n_2(\lambda) - n_1(\lambda))^2 + \frac{\sigma \lambda}{4\pi} \cdot N_2}{(n_2(\lambda) + n_1(\lambda))^2 + \frac{\sigma \lambda}{4\pi} \cdot N_2} \right)^{\frac{z}{r} \tan \theta} 2\pi \sin \theta \, d\theta$$

vorgegeben wird, wobei $P(\lambda)$ die gemessene Leistung in Abhängigkeit von der Wellenlänge, $I(I_0, \theta, \lambda)$ die Intensität der Lichtquelle abhängig von Ausgangsintensität, Einkoppelwinkel und Wellenlänge ist, $N_1(\lambda)$ der Brechungsindex der Faser, $n_2(\lambda)$ der Brechungsindex des umgebenden Mediums, $\sigma$ der Wirkungsquerschnitt für die Absorption, $N_2$ die Teilchendichte im umgebenden Medium, $Z$ die Länge des Fasersensors und $r$ der Radius der Faser ist.

*Fig. 1A*

_Fig. 1B_

_Fig. 2_

_Fig. 3_

Europäisches
Patentamt

Nummer der Anmeldung

EP 01 12 5925

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 489 513 A (IBM) 10. Juni 1992 (1992-06-10) | 1,3,4,6 | G01N21/55 |
| Y | * Spalte 1, Zeile 39-56 * * Spalte 3, Zeile 21-32; Abbildung 3 * | 2 | |
| X | US 5 416 579 A (BARSHAD YOAV ET AL) 16. Mai 1995 (1995-05-16) | 1,3,4,7 | |
| Y | * Spalte 2, Zeile 51-65 * * Spalte 3, Zeile 10-13 * * Spalte 3, Zeile 38-44; Abbildung 1 * | 2,8 | |
| X | SCHNITZER I ET AL: "EVANSCENT FIELD IR SPECTROSCOPY USING OPTICAL FIBRES AND TUNABLE DIODE LASERS" MATERIALS SCIENCE AND ENGINEERING B, ELSEVIER SEQUOIA, LAUSANNE, CH, Bd. B05, Nr. 2, 1990, Seiten 333-337, XP000087864 ISSN: 0921-5107 | 1,3,4,7 | |
| Y | * das ganze Dokument * | 2,8 | RECHERCHIERTE SACHGEBIETE (Int.Cl.7) |
| A | | 9 | |
| Y | DE 40 38 354 A (BRUKER ANALYTISCHE MESSTECHNIK) 11. Juni 1992 (1992-06-11) * Spalte 5, Zeile 40-66; Abbildungen 6A,6B * | 2 | G01N |
| X | POTYRAILO R A ET AL: "Spatially resolved analyte mapping with time-of-flight optical sensors" TRAC, TRENDS IN ANALYTICAL CHEMISTRY, ANALYTICAL CHEMISTRY. CAMBRIDGE, GB, Bd. 17, Nr. 10, 12. November 1998 (1998-11-12), Seiten 593-604, XP004142622 ISSN: 0165-9936 | 1,5 | |
| Y | * Abschnitt 2 * | 8 | |

Der vorliegende Recherchenbericht wurde für alle Patentansprüche erstellt

| Recherchenort | Abschlußdatum der Recherche | Prüfer |
|---|---|---|
| MÜNCHEN | 23. Januar 2002 | Hoogen, R |

**ANHANG ZUM EUROPÄISCHEN RECHERCHENBERICHT**
**ÜBER DIE EUROPÄISCHE PATENTANMELDUNG NR.**   EP 01 12 5925

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2002

| Im Recherchenbericht angeführtes Patentdokument | | Datum der Veröffentlichung | Mitglied(er) der Patentfamilie | | Datum der Veröffentlichung |
|---|---|---|---|---|---|
| EP 0489513 | A | 10-06-1992 | US | 5097129 A | 17-03-1992 |
| | | | EP | 0489513 A2 | 10-06-1992 |
| | | | JP | 4294252 A | 19-10-1992 |
| US 5416579 | A | 16-05-1995 | KEINE | | |
| DE 4038354 | A | 11-06-1992 | DE | 4038354 A1 | 11-06-1992 |

EPO FORM P0461

Für nähere Einzelheiten zu diesem Anhang : siehe Amtsblatt des Europäischen Patentamts, Nr.12/82